(19) Europäisches Patentamt
European Patent Office
Office européen des brevets

(11) **EP 2 214 095 A2**

(12) **EUROPEAN PATENT APPLICATION**
published in accordance with Art. 153(4) EPC

(43) Date of publication:
04.08.2010 Bulletin 2010/31

(51) Int Cl.:
*G06F 3/048* (2006.01)   *G06F 3/033* (2006.01)

(21) Application number: **08845230.5**

(86) International application number:
**PCT/LV2008/000010**

(22) Date of filing: **03.11.2008**

(87) International publication number:
**WO 2009/057984 (07.05.2009 Gazette 2009/19)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **01.11.2007 LV 070124**

(71) Applicants:
• **Batyrev, Boris**
  **2016 Jurmala (LV)**

• **Smidre, Peteris**
  **1050 Riga (LV)**

(72) Inventors:
• **Batyrev, Boris**
  **2016 Jurmala (LV)**
• **Smidre, Peteris**
  **1050 Riga (LV)**

(54) **METHOD AND DEVICE FOR INPUTTING INFORMATION BY DESCRIBING ADMISSIBLE CLOSED TRAJECTORIES AND A CHARACTERISTIC POINT SENSING DEVICE (VARIANTS)**

(57)    The method and the device for inputting information by description of the allowable closed trajectories (ACT), the device of the sensors of the characteristic points. The manipulator unit (1-6) allows description by finger, hand, foot ACT from a set, **characterized by** common initial point (10), the set of the numbered characteristic points (11) with sensors (13), that are on intersections of 3, 4, 6, 8, 12 rays, outgoing from 10, with 1 - 4 circles with centre in 10, elements of trajectories (12), connecting 10 with 11 by segments, 11 to 11 by arcs or segments. The inputted information is determined in the computing unit (9) by actualised table of information by the number of described ACT (15), which is determined by the table of the numbers of trajectories (14) from sequence of the numbers (16) of 13 actuated at passing 11, control can be visual, tactile at 1 - 6, visual at the display (7), audio via loudspeaker or headphones (8). Preferably, technique of input is trained to an instinctive level; input is performed by blind method.

Fig. 1

EP 2 214 095 A2

## Description

## 1. The art, to which the invention is related.

The invention pertains to information systems and devices (D), class Digital data processing by means of electric D (G06 F), subclasses Input D for data transfer to be processed into a form that can be processed by the computer, output D for transferring data from a processing D to an output D, e.g. interfaces (G06 F 3/00). Input D or combined input and output D for interaction of user with computer (G06 F 3/01). Input D by using manually controlled switches, like keyboard or dials (G06 F 3/02). D for converting the position or movement of a sensing element into a coded form (G06 F 3/03), preferably to methods and D for inputting information, particularly symbolic, by description of the allowable trajectories (AT), as well as D for conversion of description of AT into code.

## 2. State of the art.

## 2.1. Intended use of the invention.

The main intended use of the invention is to solve actual problems:

1. To replace the methods for inputting information (MII) that use of traditional D for inputting information (DII) in various fields of engineering, science, culture and everyday life.
2. To replace traditional DII by finger, hand or foot of the type of a touch display (TD), touch pad (TP), panel of sensors (PS), keyboard (key, button, slider, disk), handle (joystick, mouse, switch, regulator, steering wheel, steering control), pedal, etc in different D.
3. To help increase quality of information processing and control, increase volume and speed of input, reduce the time of input, probability of mistakes and probability of leaving any input mistake s unnoticed, facilitate input and acquisition of input skills up to an instinctive level, make it possible to input information by blind method (BM) and by the blind and visually impaired persons (BVIP), reduce dimensions and weight, simplify and reduce costs of DII, increase their operational characteristics.

## 2.2. The known solutions.

At present, the above-mentioned problems are resolved as follows:

1. By using small (portable) "keyboards", which have "independent keys" ("fields of keys" on TD or TP) and "combined keys", corresponding to simultaneous (or almost simultaneous) pressing by a finger several neighbouring "independent keys" (RU 2267183C2, RU 2285284C2, US 5666113A).

2. By using small (portable) "keyboard" that contain "independent keys" and an "optical system" that detects whenever the finger is leaving the key area (upwards, downwards, right, left), which allows simultaneous input of five symbols by pressing one key (RU 2246749C2).
3. By using TD and TP with a marker (or stylus) to press keys of a miniature keyboard by hand (US 6130665A) or to draw symbols (US 4972496, RU 2236036C2).
4. By using TD and TP with a displayed "keyboard", where a user "depresses" a key by finger (WO 03/032140A1) or by marker (stylus, pen) (RU 2277719C2) and describes one of the AT. The AT looks like a line segment that begins in this key (the area where the key is located), and goes off in one of the four or eight directions with the angle between the adjacent directions 90° or 45° or as an aggregate of such segments (broken trajectories) and ends when the finger or the marker is taken off of the TD or TP.

## 2.3 Analysis of known solutions.

The known solutions are neither effective enough, nor are they ergonomic enough; they do not create the possibility to acquire the input skills up to an instinctive level and information input by BM, BVIP, TD and TP are rather complicated and expensive. The MII and DII is accepted as a prior art, the patent RU 2277719C2 (=WO 02/08882 A1) with description of AT, and as an related art is accepted the international patent application WO 03/032140A1, the main disadvantage includes the compulsory use of complicated and expensive TD or TP of rather big size and a computer; the compulsory use of the marker (stylus, pen) in the prior art; limited ways of information input, which in the prior art is done by hand, and by finger in the related art; the necessity to display of the keyboard with a multitude of keys to describe AT, acquisition of intuitive input skills is impossible and neither possible is information input by BM or use by the BVIP.

## 3. Description of the invention.

## 3.1. Structure of the invention.

In this invention, the above-mentioned problems are resolved by implementation of a group of inventions, and this group of inventions is combined into a single invention concept and includes:

1. The MII by description of the allowable closed trajectories (ACT) (see subsection 3.2), which resolves the first and the third of the problems mentioned above.
2. The DII by description of the ACT (see subsection 3.3) is used in the said MII, by implementing the MII to resolve the second and the third of the above-mentioned problems.

3. D of sensors of the characteristic points (DSCP) (see subsection 3.4), which can be used in the proposed DII to reduce dimensions, weight, costs of the DII, increase their operational characteristics and reduce the probability of mistakes during input of information.

### 3.2. Proposed MII by description of ACT.

The MII by description of AT (see Fig. 1) (the prior art is the patent RU 2277719C2; the related art is the international patent application WO 03/032140A1), where:

1. At least one DII by description of AT is used.

2. The used DII can either be an independent D, which allows information input into other D through the conventional communication channels (see Fig. 2), or an independent unit of other D, which allows information input into these D through interface hardware (see Fig. 3), or a component of other D, solving the problem of information input into these D (see Fig.4).

3. The user inputs information, which per se is a finite sequence of alphabetical, numeric, sign, graphic, phonetic, stenographic, topographic, music and other symbols and/or symbols of commands, used for presentation and/or processing and/or control in different D and systems in various fields of engineering, science, culture and everyday life.

4. The input information (II) is determined by the number of the described AT according to the table of information (TI) actualised at the moment of input from a nonempty set of TI (STI).

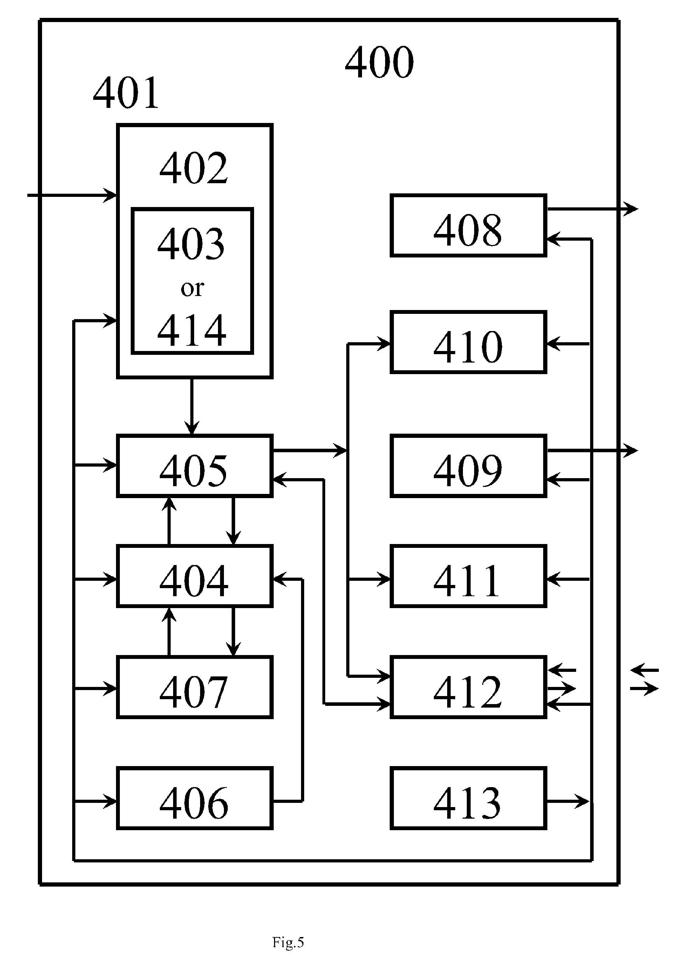

5. The used DII can be of the mono or poly-unit (modular) design (see subsection 3.3, Fig. 5); it comprises a case (C) (401), at least one manipulator unit (MU) (402), used for description of AT, with sensors of at least one of the known types (403); it comprises [1] a processor (micro controller) (P) (404), random access memory (RAM) (405), built-in read memory (BROM) (406), built-in flash memory (BFM) (407), display (DU) (408), loudspeaker(s) and/or headphones (L/H) (409), synthesizer of signs (SS) (410), voice synthesizer (VS) (411), information exchange unit (IEU) (412), electrical power unit (EPU) (413).

[1] All or a part of these units can be absent, if their functions perform similar units of D, where information is entered and/or where DII is a unit or component.

6. The number of the described AT is determined by hardware or software according to the sequence of sensors of the used MU actuated during such a description.

7. The AT is described using auxiliary information and/or means; control (i.e. monitoring) description of AT may be visual on MU and/or DU and/or audio through L/H.

8. Control over II may be visual on DU and/or audio through L/H and corrected at MU; the II may be used to control the DII or it may be sent through the conventional communication channels to other D or through the interface to other units or components of D that comprise this DII that use the information.

The proposed MII by description of AT mentioned above is **characterized by the following:**

1. The AT is described from at least one finite numbered set of ACT, for this purpose using MU of DII, which ensures possibility of description of only such trajectories, i.e. the AT belongs to the set of ACT (the description is given below; the set of ACT is different from the set of AT utilized in both the prior art and related art).

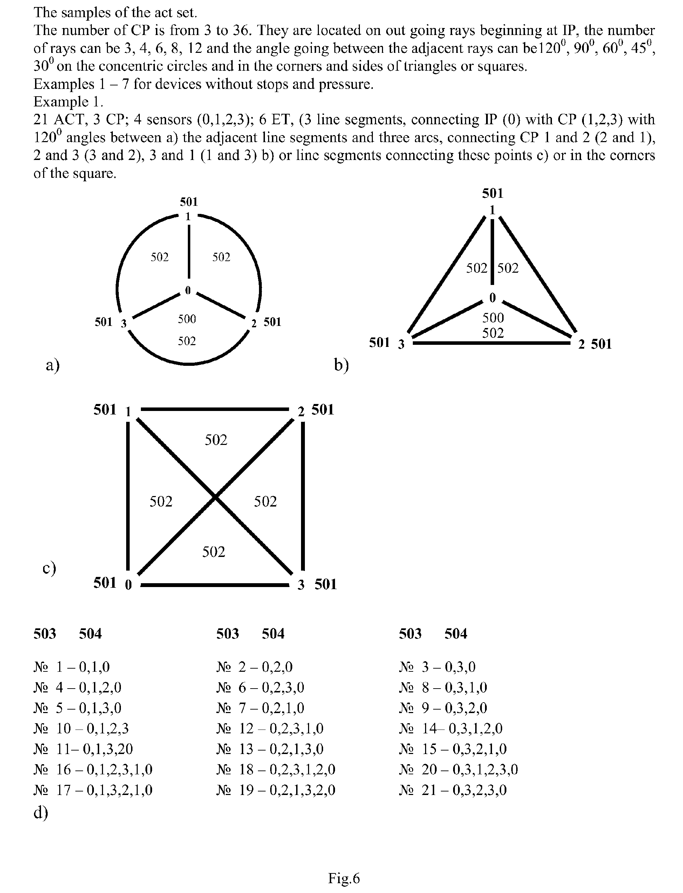

2. The set of ACT is described (see examples in Appendix, Fig. 6 - 12), the given set of ACT is the numbered subset of one of the sets of all possible AT and characterized by:

presence of common initial point (IP), closedness (i.e. the end point coincides with the IP), presence of the set of the numbered characteristic points (CP), located at intersections of outgoing from IP 3, 4, 6, 8, 12 rays with the angles between the adjacent rays 120°, 90°, 60°, 45°, 30° with at least one circle (preferably with 1, 2, 3, 4) with its centre in the IP, the set of elements of trajectories (ET), which are line segments, connecting the IP with the CP, the arcs of circles or line segments, connecting CP between themselves (the location of CP is also possible in other clearly determinable and easily found points, for example, in the corners and on the sides of triangles or squares).

3. The common IP is associated with the initiating sensor (IS); each CP is associated with the numbered sensor of the characteristic point (SCP), IS and SCP can be the "general sensor of the characteristic point" (GSCP) (the set of sensors with certain a concept of actuation) or the "virtual sensor of the characteristic point" (VSCP) (which actuation is determined by calculation according to the data of sensors). IS and the set of all SCP (GSCP, VSCP) can be made in the form of the special miniature electronic DSCP (414) according to particular embodiments of the MU of DII (see Fig. 5, subsection 3.4).

4. Description of ACT is performed according to particular embodiments (types) of MU of DII by finger on TD, TP or PS, by finger with a marker on TD, TP or PS, by finger using keys (button, slider, disk, switch, regulator), by hand with a marker (stylus, pen) on TD or TP, by hand using a handle (joystick, mouse, steering wheel, steering control, switch, regulator), by hand with MU of DII or DII in the space, or foot using a pedal or PS, etc.

5. The MU of DII is preferably located in the place more suitable for information input (in the particular embodiments of MU of DII by finger, hand or foot); the IP is to be located in the place which the user can easily remember and find on MU; the IP and preferably the CP and/or ET are visually and/or tactilly marked on MU; the key, handle or the pedal should preferably be fixed to IP; any movement is allowed only along the ET of ACT.

6. Description of ACT begins in IP, then the IS is actuated, i.e. the IS sends a signal into its line or its own signal or its number into the common line.

7. Description of ACT by the ET is performed from IP to one of neighbouring CP (i.e. on the nearest to IP circle), from one CP to one of neighbouring CP (i.e. on the same circle or the same ray), passage through CP actuates the associated SCP (GSCP, VSCP), while actuation of other SCP is excluded with high probability, and description of ACT is preferably performed without change of direction of rotation either clockwise or counter clockwise in the range of one (full) rotation (for easier memorization, acquisition of skills of input to the instinctive level and increase of speed of input).

8. The MU of DII is made in such a way that SCP, corresponding to CP passed through during description ACT, is considered actuated according to the embodiment MU of DII without stops and pressure one time, irrespective of time of stop (delay) in this CP (in the field sensitivity of respective SCP) and pressure force on SCP in CP, according to the embodiment MU of DII with stops or pressure n or m times accordingly

$n = \min (k, 1 + E (T/\Delta T))$,

$m = \min (k, 1 + E (G/\Delta G))$,

where: k is the maximum accountable number of actuations of SCP of this CP (it is possible different for different CP), E (x) is the integer part of x, T is the time of stop (delay) in this CP, $\Delta T$ is the period between actuations of sensors, G is the pressure force on SCP in CP, $\Delta G$ is the increment of pressure on sensor. According to the embodiment with stops or pressure, quantity of ACT and respectively volume of II significantly increases.

9. Control over passing through the IP and CP and/or actuation of IS and SCP is visual on MU or DU and/or audio through L/H and/or preferably tactile.

10. Description of ACT is finished in the IP, and the IS is actuated.

11. The number of described ACT is determined by hardware or software according to the table of the numbers of trajectories (TNT), establishing a univocal correspondence between the number of ACT and the sequence of the numbers of SCP (GSCP, VSCP) actuated during the description.

12. TNT is preferably made in such a way so that it would be easily and naturally memorized in association with the description of ACT.

13. Control over the II is visual on D and/or audio through L/H and/or tactile (for BVIP, preferably on the Braille DU of the creeping line type), the mistakenly entered symbol (ES) is cancelled preferably by description of the specific (corrective) ACT.

14. Replacement of the actualised TI for another from the STI is done preferably by description of the specific ACT.

15. The STI is made changeable, modifiable or unchangeable, it is preferably made in such a fashion that various TI contain information of various meaning (e.g., register shifts, change of alphabets, controlled D, etc), have the order according to the frequency of use and/or sequence of use, information contained in TI have the order according to the meaning and/or tradition (e.g., alphabet, numerical row) so that to facilitate easy memorization, and to possibly minimize the average time of information input (e.g., the most frequently input symbols correspond to the simplest ACT).

16. Training for acquisition of skills of information input is done by using DII, using auxiliary information and/or means and control of description of ACT (passing CP and actuating SCP) and control of the II; in the process of training the information input skills are preferably honed to an instinctive level, then the auxiliary information and means and control over description of ACT are preferably switched off, and information input is preferably accomplished by BM.

**The above-mentioned MII by description of AT (hereinafter referred to as MII by description of ACT) is characterized by the following:**

1. It replaces MII using DII of the type TD, TP, PS, keyboard (key, button, slider, disk, switch, regulator), handle (joystick, mouse, switch, regulator, steering wheel, steering control), pedal, etc in various D in various fields of engineering, science, culture and everyday life.

2. It increases quality of information processing and control, allows an increase of volume and speed of information input, reduces the time required for information input, probability of mistakes and probability of leaving any input mistake s unnoticed, allows training for acquisition of input skills to the instinctive level and inputting information by BM.

3. It reduces dimensions, weight and costs of DII, increases their operational characteristics and simplifies the design.

**3.3. The proposed DII by description of ACT.**

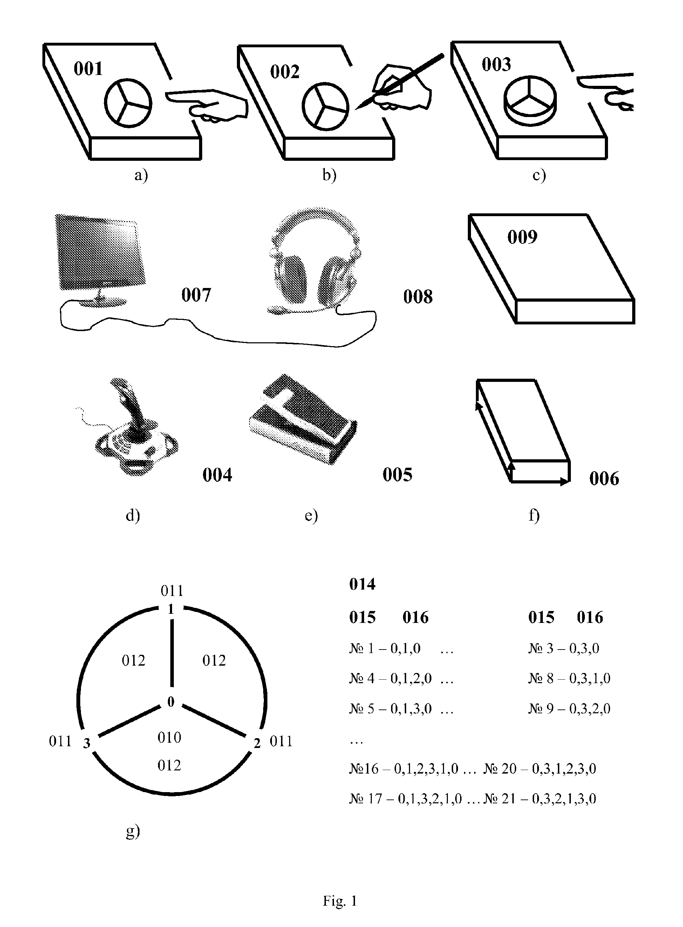

The DII by description of AT (see Fig. 1) (the prior art is the patent RU 2277719C2; the related art is the international patent application WO 03/032140A1), which:

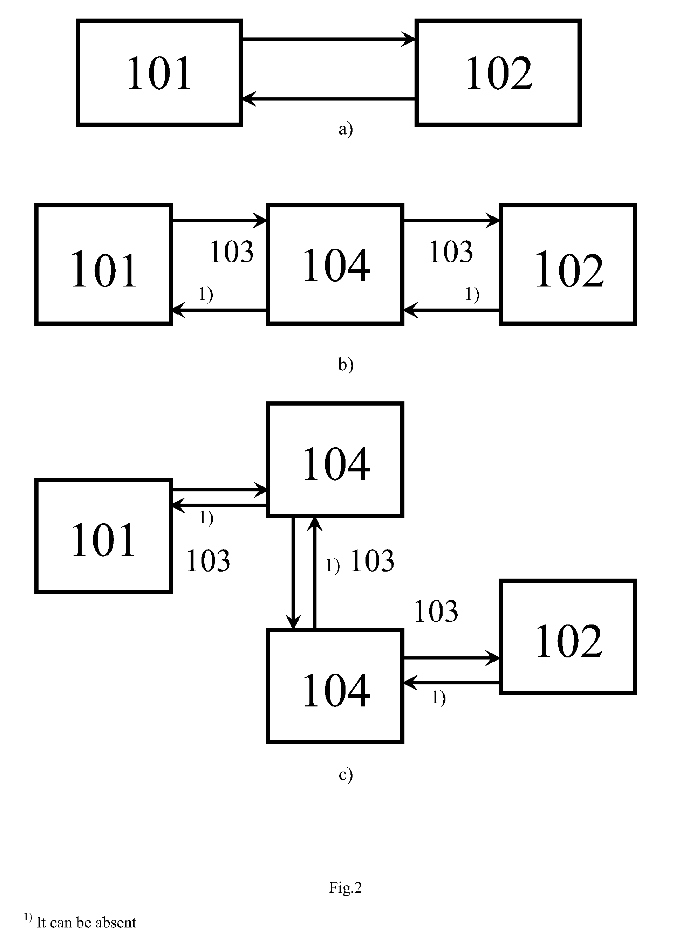

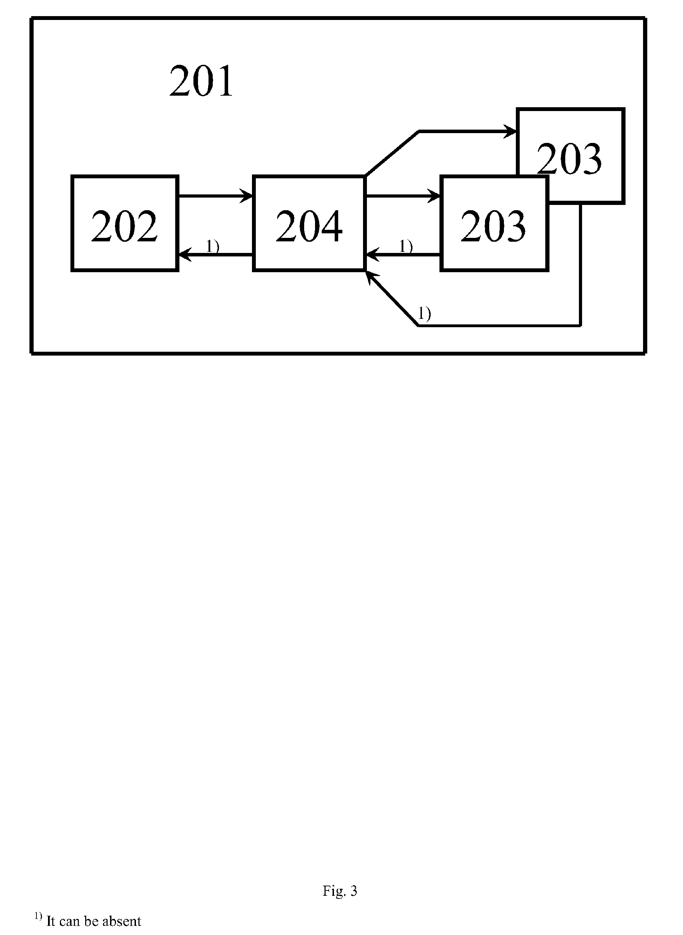

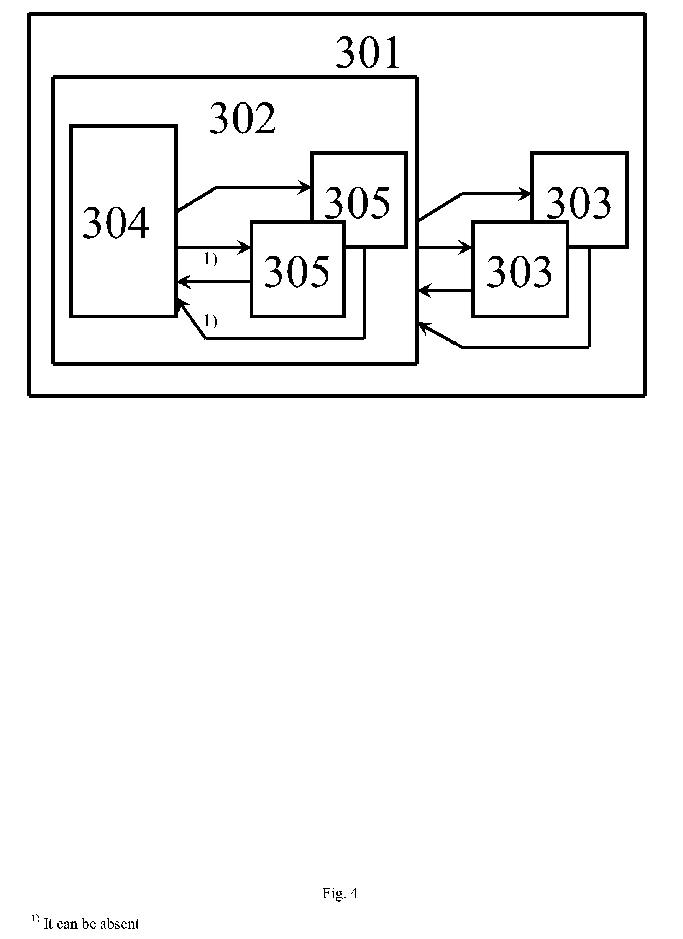

1. It can be either an independent D, which enables information input into other D through the conventional communication channels (see Fig. 2), or an independent unit of other D, which enables information input into these D through interface hardware (see. Fig. 3), or a component of other D solving the problem of information input into these D (see Fig. 4).

2. It is the used for inputting information, which per se is a finite sequence of alphabetical, numeric, sign, graphic, phonetic, stenographic, topographic, music and other symbols and/or symbols of commands, to be used for presentation and/or processing and/or control in different D and systems (informational, computing, communication, control, electrical engineering, radio engineering, controlling and measuring, armament and military equipment, heavy industries, machine-tool construction, automobile, railroad, air, sea and river transport, education and training, sports, games, etc) in various fields of engineering, science, culture and everyday life.

3. It determines II by the number of the described AT according to the actualised at the moment of input from nonempty STI.

4. It can be of the mono or poly-unit (modular) design (see Fig. 5); it comprises C (401), at least one MU (402), used for description of AT, with the sensors of at least one of the known types (403) (electromechanic, capacitive, induction, electromagnetic, piezoelectric, photoelectric, laser, inertial, etc.); it can comprises P (404), RAM (405), BROM (406), BFM (407), DU (408), L/H (409), SS (410), VS (411), IEU (412), EPU (413).

[2] All or a part of these units can be absent, if their functions perform similar units of D, where information is entered and/or where DII is a unit or component.

5. It determines the number of the described AT by implementing hardware and/or software by the sequence of sensors of the used MU actuated during such a description.

6. It allows to conduct describe of AT using auxiliary information and/or means; control (i.e. monitoring) description of AT may be visual on MU and/or DU and/or audio through L/H.

7. It provides possibility to control over the II visually on DU and/or audio through L/H and to correct the II at MU, to use the II to control the DII or to send the II through the conventional communication channels to other D or through the interface to other units or components of D, containing this DII, which use the information.

The proposed DII by description of AT is **characterized by the following:**

1. It uses the MII by description of ACT and is used in the said MII.
2. MU makes it possible to describe AT from at least one finite numbered set of ACT of the MU and only such trajectories.

3. The described set of ACT (see Appendix Fig. 6-12) is the numbered subset of one of the sets of all possible AT that are characterized by: presence of common IP, closedness (i.e. the end point coincides with the IP), presence of the set of the numbered CP, located at intersections of outgoing from IP 3, 4, 6, 8, 12 rays with the angles between the adjacent rays 120°, 90°, 60°, 45°, 30° with at least one circle (preferably with 1, 2, 3, 4) with its centre in the IP, the set of ET, which are line segments, connecting the IP with the CP, the arcs of circles or line segments, connecting CP between themselves. (The location of CP is also possible in other clearly determinable and easily found points, for example, in the corners and on the sides of triangles or squares).

4. The common IP is associated with the IS; each CP is associated with the numbered SCP, IS and SCP can be the GSCP (the set of sensors with certain a concept of actuation) or the VSCP (which actuation is determined by calculation according to the data of sensors). The IS and the set of all SCP (GSCP, VSCP) can be made in the form of the special miniature electronic DSCP (414) according to particular embodiments of the MU of DII (see Fig. 5, subsection 3.4.).

5. It is made according to particular embodiments (types) of MU of DII where description of AST is performed by finger on TD, TP, PS, by finger with a marker on TD, TP, PS, by finger using keys (button, slider, disk, switch, regulator), by hand with a marker (stylus, pen) on TD or TP, by hand using a handle (joystick, mouse, steering wheel, steering control, switch, regulator), by hand with MU of DII or DII in the space, or by foot using a pedal, PS, or etc.

6. The MU of DII is preferably located in the place more suitable for information input (in the particular embodiments of MU of DII, by finger, hand or foot); the IP is to be located in the place which the user can easily remember and find on MU, the IP and preferably the CP and/or ET are visually and/or tactilly marked on MU; the key, handle or the pedal should preferably be fixed to IP; any movement is allowed only along the ET of ACT.

7. Description of ACT begins in IP, then the IS is actuated, i.e. it sends a signal into its line or its own signal or its number into the common line.

8. Description of ACT by the ET is performed from IP to one of neighbouring CP (i.e. on the nearest to IP circle), from one CP to one of neighbouring CP (i.e. on the same circle or the same ray); passage through CP actuates the associated SCP (GSCP, VSCP), while actuation of other SCP is excluded with high probability, and description of ACT is preferably performed without change of direction of rotation either clockwise or counter clockwise in the range of one (full) rotation (for easier memorization, acquisition of skills of input to the instinctive level and increase of speed of input)..

9. The MU of DII is made in such a way that SCP, corresponding to CP passed through during description ACT, is considered actuated according to the embodiment MU of DII without stops and pressure one time, irrespective of time of stop (delay) in this CP (in the field sensitivity of respective SCP) and pressure force on SCP in CP, according to the embodiment MU of DII with stops or pressure n or m times accordingly

n = min (k, 1 + E (T/ΔT)),

m = min (k, 1 + E (G/ΔG)),

where: k is the maximum accountable number of actuations of SCP of this CP (it is possible different for different CP), E (x) is the integer part of x, T is the time of stop (delay) in this CP, ΔT is the period between actuations of sensors, G is the pressure force on SCP in CP, ΔG is the increment of pressure on sensor. According to the embodiment with stops or pressure, quantity of ACT and respectively volume of II significantly increases.

10. It allows to control over passing through the IP and CP and/or actuation of IS and SCP is visual on MU or DU and/or audio through L/H, and/or, preferably, tactile.

11. Description of ACT on MU is finished in the IP, and the IS is actuated;

12. The number of described ACT on MU is determined by hardware or software according to TNT, establishing a univocal correspondence between the number of ACT and the sequence of the numbers of SCP (GSCP, VSCP) actuated at its description.

13. TNT is preferably made in such a way so that it would be easily and naturally memorized in association with description of ACT.

14. It allows to control over the II visually on D and/or audio through L/H and/or tactilly (for blind and vision-impaired persons (BVIP), preferably on the Braille DU of the creeping line type) and to cancel the mistakenly ES preferably by input of the specific ACT.

15. It allows replacement of the actualised TI for another from the STI preferably by description of the specific ACT.

16. STI can be made changeable, modifiable or unchangeable, it is preferably made in such a fashion that various TI contain information of various meaning (e.g., register shifts, change of alphabets, controlled D, etc), have the order according to the frequency of use and/or sequence of use, information contained in TI have the order according to the meaning and/or tradition (e.g., alphabet, numerical row) so that to facilitate easy memorization, and to possibly minimize the average time of information input (e.g., the most frequently input symbols correspond to the simplest ACT).

17. It ensures possibility effective training for information input using auxiliary information and/or means and control of description of ACT (passing CP and actuating SCP) and control of the II; in the process of training the information input skills are preferably honed to an instinctive level, then the auxiliary information and means and control over description of ACT are preferably switched off, and information input is preferably accomplished by BM.

The said DII by description of AT, (hereinafter referred to as DII by description of ACT) is characterized by the following:

1. It can replace and is intended to replace DII of the type TD, TP, PS, keyboard (key, button, slider, disk, switch, regulator), handle (joystick, mouse, switch, regulator, steering wheel, steering control), pedal, PS etc in various D in various fields of engineering, science, culture and everyday life.

2. It increases quality of information processing and control, increases the volume and speed of information input, reduces the time required for information input, probability of mistakes and probability of leaving any input mistake unnoticed, makes it possible to acquire input skills to the instinctive level, information input by BM.

3. It reduces dimensions, weight, and costs of DII, increases their operational characteristics and simplifies the design.

The said DII by description of ACT is characterized by the following:

1. The embodiment of MU is with TD (i.e. MU and DU are combined), TP, PS, with or without a marker attached to finger, with a hand-held marker (stylus, pen), or in a particular combined embodiment with or without marker.

2. Description of ACT is accomplished by finger, by finger with an attached marker or with a hand-held marker (stylus, pen).

3. According to particular embodiments the MU can be with one or several sets of ACT that might differ by location, size, the number of rays, the number of circles, ET (line segments or arcs), with or without counting stops or pressure, the maximal accounted actuated number of SCP; replacement of the actualised at the moment of input set of ACT and the corresponding TNT is preferably done by description of a specific ACT.

4. The IS and SCP in the embodiments with implementation of TD and TP are the GSCP, and in the embodiments with PS they are ether sensors or VSCP.

5. The TD, TP, PS and preferably DU bear visual markings (displayed on TD and DU) and/or tactile markings (preferably on TP and PS, especially for the BVIP) IP and preferably the CP and ET, which correspond to to the actualised or all present in/on MU sets of ACT.

6. It provides the possibility of control of placement of finger, finger with an attached marker (stylus, pen) in IP as well as control over passing through CP and/or actuation of IS and SCP (taking into account the time of stop or the force of pressure for the MU embodiments where such features are implemented), which can be done visually on MU or DU and/or, preferably audio through L/H and/or tactilly (preferably in the embodiments with TP and PS, especially for information input by BM and by the BVIP).

**The said DII by description ACT is characterized by the following:**

1. The MU is made according to certain embodiments with a key, button, slider, dial, switch, spherical switch, regulator, etc.

2. Description of ACT is made by finger implementing one of above-mentioned embodiments of MU.

3. According to particular embodiments the MU can be with one or several sets of ACT, the latter preferably being subsets of a single set of ACT; replacement of an actualised set of ACT and the corresponding TNT is preferably done by description of the specific ACT.

4. The IS and SCP can be sensors of one of the known types (electro-mechanical, capacitive, induction, electromagnetic, piezoelectric, photoelectric, laser, etc), or various embodiments of the DSCP according to particular embodiments the MU (see subsection 3.4).

5. The MU is fixed in the IP and allows passage through the ET only (i.e. describing the ACT only) preferably of the actualised set of ACT.

6. The MU preferably bears visual and/or tactile markings of CP and ET that correspond to the actualised or all featured sets of ACT.

7. It allows to control over passage of CP and/or actualisation of SCP (taking into account the time of stop or force of pressure according to the embodiment MU that have such features) visually on MU or DU and/or preferably audio through L/H and/or tactilly (especially for information input by BM and by the BVIP).

**The said DII by describing ACT is characterized by the following:**

1. The MU is made according to certain embodiments with a handle, joystick, mouse, lever, switch, spherical switch, regulator, rudder, steering wheel, etc.

2. Description of ACT is carried out by right, left, or one of hands implementing one of above mentioned embodiments of MU.

3. According to particular embodiments the MU can be with one or several sets of ACT, the latter preferably being subsets of a single set of ACT; replacement of an actualised set of ACT and the corresponding TNT is preferably done by description of the specific ACT.

4. The IS and SCP can be sensors of one of the known types (electro-mechanical, capacitive, induction, electromagnetic, piezoelectric, photoelectric, laser, etc), or various embodiments of the DSCP according to particular embodiments the MU (see subsection 3.4).

5. The MU is fixed in the IP and allows passage through the ET only (i.e. describing the ACT only) preferably of the actualised set of ACT.

6. The MU preferably bears visual and/or tactile markings of CP and ET that correspond to actualised or all featured sets of ACT.

**7.** It allows to control over passage of CP and/or actualisation of SCP (taking into account the time of stop or force of pressure according to the embodiment of MU that have such features) visually on MU or DU and/or preferably audio through L/H and/or tactilly (especially for information input by BM and by the BVIP).

**The said DII by describing ACT is characterized by the following:**

1. The MU is made of the type of a pedal or PS.

2. Description of ACT is carried out by either right, or left, or one of the feet implementing one of above mentioned embodiments of MU.

3. MU is made preferably with one simple set of ACT, with 3, 4, 6, 8 rays, with one circle, or without stops and pressure, or with the counted stops or pressures preferably in the last (previous to returning to IP) CP, preferably ACT, different by the time of stops or force of pressure in the last CP, correspond to the symbols that differ quantitatively and determined by the time of stops or force of pressure.

4. The MU is made preferably with IS and SCP of one of the known types of sensors, in embodiment of PS being sensors or VSCP.

5. The pedal is fixed in IP and allows motion only along ET of ACT (i.e. describing the ACT only);

**6.** It provides possibility to control placement of foot in IP of PS as well as control of passing through CP of pedal or foot and/or actuation of IS and SCP (taking into account the time of stop or force of pressure according to the embodiment of MU that has such features), which can be done visually on DU and/or preferably audio through L/H and/or tactilly.

**The said DII describing ACT is characterized by the following:**

1. The MU is made of the type an inertial system.

2. Description of ACT is done by hand with MU, or DII in the space.

3. The MU is made preferably with one simple set of ACT, with 4, 6, 8 rays, with one circle, or two circles in two perpendicular planes, without stops or pressure.

4. The IS is of the kind of a key (button), while SCP is either VSCP or on a basis of inertial sensors of one of the known types, or a special miniature electronic DSCP (see subsection 3.4).

5. It provides possibility of control over actuation of SCP visually on DU and/or audio through L/H.

**The said DII by describing ACT is characterized by the following:**

1. It is made in the embodiment with at least two combined MU, MU is preferably of the type of a handle (joystick, mouse, lever, etc) with at least one MU preferably of the type of a key (button, slider, dialling disk, etc) or of the type TP (TD, PS);

2. Description of ACT using MU of the type of a handle is done by hand, while description of ACT using MU of the type of a key or TP is done by finger.

3. Preferable is distribution of functions between MU with a type of a handle and MU of the type of a key or TP, e.g. MU of the type of a handle does the input of the most important information or control commands, while MU of the type of a key or TP does the input of auxiliary (additional, service) information.

### 3.4. The proposed DSCP.

The DSCP is a special miniature electronic D of sensors on the basis of sensors of at least of one of the known types (electro-mechanical, capacitor, induction, electromagnetic, piezoelectric, photoelectric, laser, inertial etc.) and be an integrated circuit, electromagnetic, opt electronic, opt magnetic, inertial; **it is characterized by the following:**

1. It combines or integrates in a uniform D a IS and the set of SCP of MU of the proposed DII by description of ACT of the above-described embodiments.

2. It provides interaction with mechanical components of MU of the proposed embodiments of DII describing ACT, preferably with a type of a key (button, slider, dial, switch, spherical switch, regulator), handle (joystick, mouse, lever, switch, spherical switch, rudder, steering wheel, regulator), pedal, PS, inertial system; it records the passage of IP and CP ACT of MU.

3. It provides interaction with electronic units (P, RAM) of the proposed embodiments of DII, issues the numbers or sequences of the numbers of the sensors (IS, SCP) actuated during such description of ACT (taking into account the time of stop or force of pressure according to the embodiment MU that has such features).

## 4. Short description of the drawings.

1. Fig. **1.** DII by description of ACT and a set of ACT (see illustration) a) by finger using MU of TP type, b) by hand with a marker using MU of TP type, c) by finger using MU of key type d) by hand using MU of a handle type, e) by foot using MU of pedal type) by hand using MU inertial type; g) set of ACT (embodiment), where: 001 is MU of TP type; 002 is MU of TP type with a marker; 003 is MU of key type; 004 is MU of handle type; 005 is MU of pedal type; 006 is inertial type MU; 007 is DU; 008 is L/H; 009 computing units (P, RAM, BROM, BFM, IEU, EPU), 010 is IP; 011 is CP; 012 is ET; 013 is SCP; 014 is TNT is 21 ACT; 015 is the number of ACT; 016 is a sequence of the numbers of sensors actuated by description of ACT (IS, SCP).

2. Fig. 2. Information input using DII by description of ACT, which is an independent D, a) exchange via the built-in units; b) exchange via the built-in units and additional (external) D of information exchange; c) exchange via two additional (external) D of information exchange, where: 101 is DII by description of ACT;

102 is D, into which information is input (where information is used); 103 is standard communication channels; 104 is additional (external) D of information exchange.

3. Fig. 3. Information input using DII by description of ACT, which is an independent unit of D, into which information is input, where: 201 is D, into which information is input; 202 is DII by description of ACT (unit); 203 is other units 201; 204 is interface.

4. Fig. 4. Information input using DII by description of ACT, which a component of D, into which information is input, where: 301 is D, into which information is input, 302 is the unit of 301, containing DII by description of ACT; 303 is other units of 301; 304 is DII by description of ACT (component); 305 is other components of 302.

5. Fig. 5. A design of DII by description of ACT as a embodiment of independent D, where: 400 is DII by description of ACT; 401 is C; 402 is MU; 403 is a set of sensors (IS, SCP); 404 is P; 405 is RAM; 406 is BROM; 407 is BFM; 408 is DU; 409 is L/H; 410 is SS; 411 is VS; 412 is IEU; 413 is EPU; 414 is DSCP.

6. Fig. 6. A set of ACT with 3 CP without stops and pressure (embodiment); a) with ET connecting CP, in the form of arcs of a circle; b) with ET connecting CP, in the form of line segments; c) with IP and CP in square corners; d) TNT is 21 ACT, where: 500 is IP; 501 is CP; 502 is ET; 503 is the number of ACT; 504 is the sequence of the numbers of actuated sensors (IS, SCP) during description of ACT.

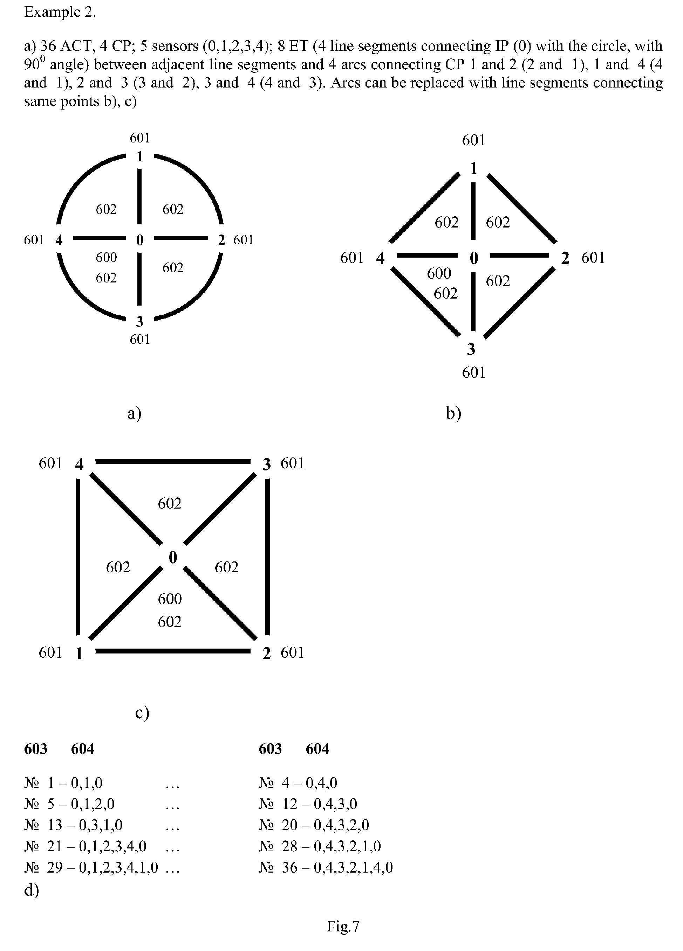

7. Fig. 7. A set of ACT with 4 CP without stops and pressure (embodiment); a) with ET, connecting CP, in the form of arcs of a circle; b) and c) with ET connecting CP, in the form of line segments; d) TNT is 36 ACT, where: 600 is IP; 601 is CP; 602 is ET; 603 is the number of ACT; 604 is the sequence of the numbers of sensors (IS, SCP) actuated during description ACT.

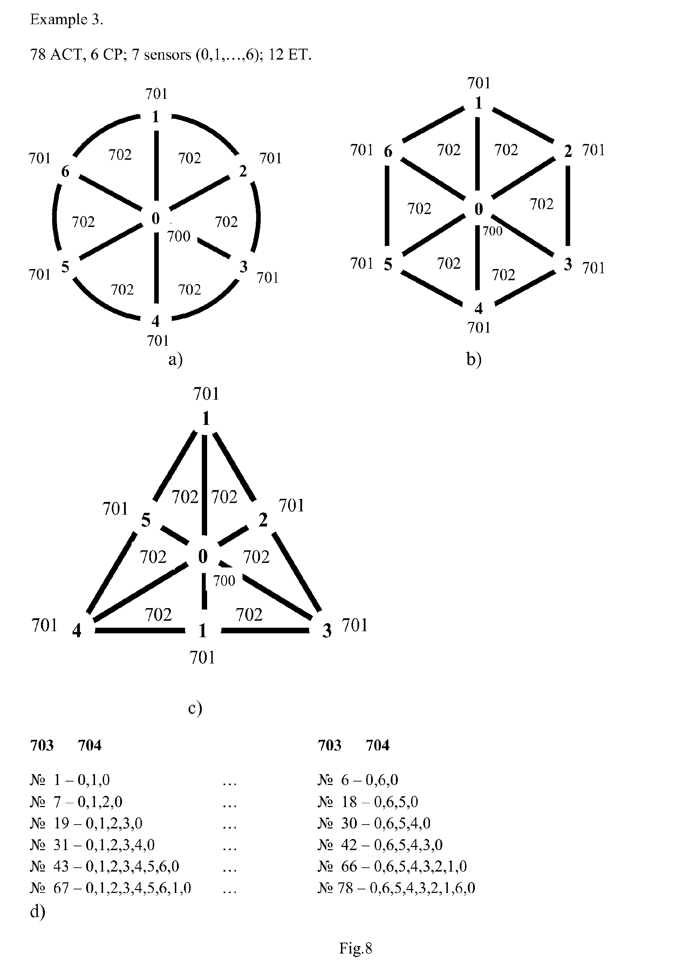

8. Fig. 8. A set of ACT with 6 CP without stops and pressure (embodiment); a) with ET connecting CP, in the form of arcs of a circle; b) with ET connecting CP, in the form of line segments; c) with CP in the corners and sides of a triangle; d) TNT is 78 ACT, where:

700 is IP; 701 is CP; 702 is ET; 703 is the number of ACT; 704 is the sequence of the numbers of actuated sensors (IS, SCP) during description of ACT.

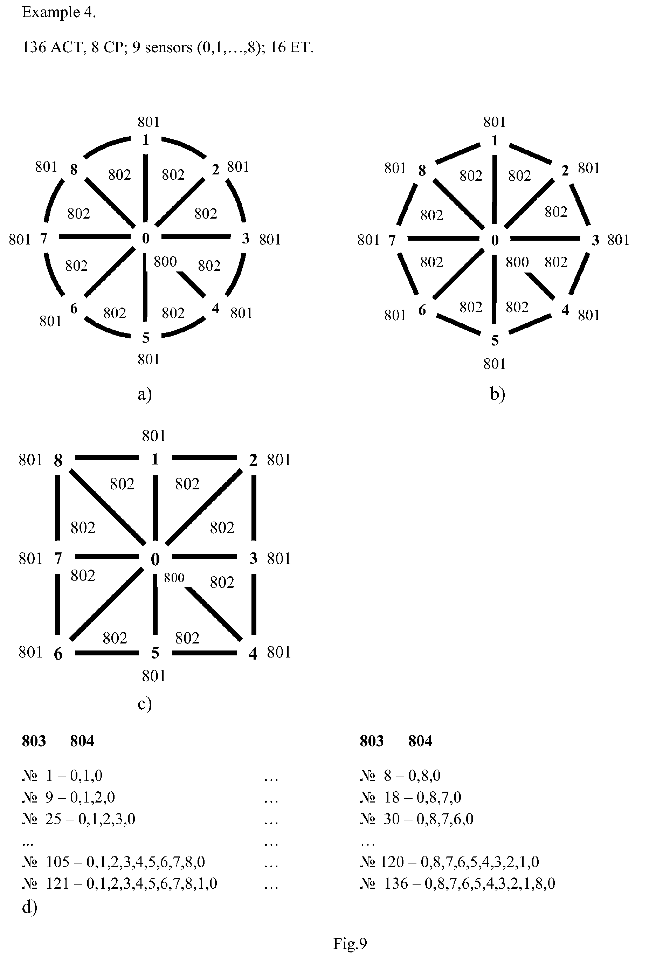

9. Fig. 9. A set of ACT with 8 CP without stops and pressure (embodiment); a) with ET connecting CP, in the form of arcs of a circle; b) with ET connecting CP, in the form of line segments; c) with IP and CP in corners and sides of a square; d) TNT is 136 ACT, where:

800 is IP, 801 is CP; 802 is ET; 803 is the number of ACT; 804 is a sequence of the numbers of actuated sensors (IS, SCP) during description of ACT.

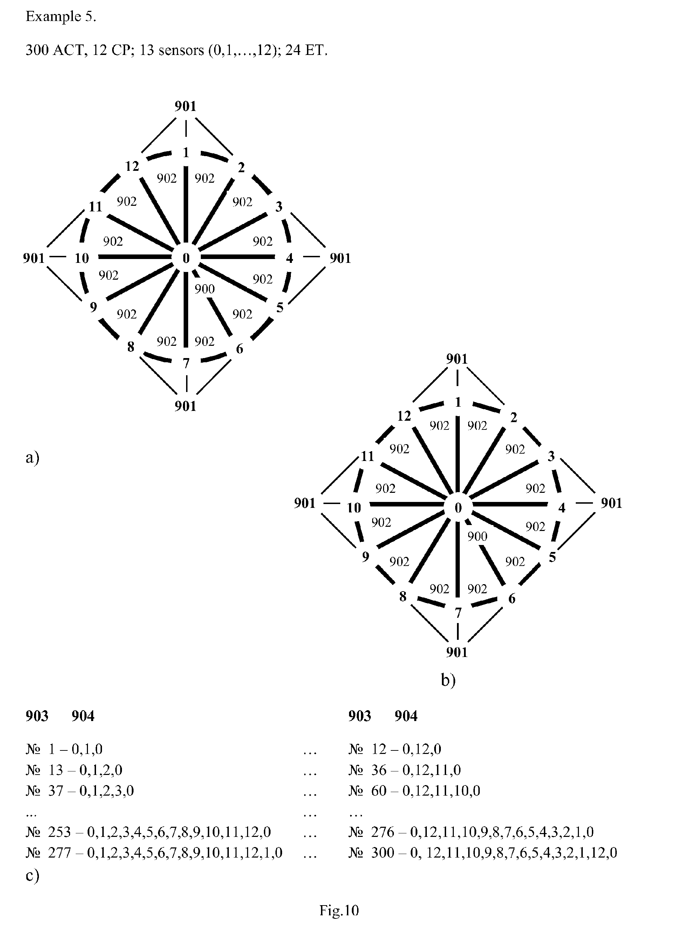

10. Fig. 10. A set of ACT with 12 CP without stops and pressure (embodiment), a) with ET connecting CP, in the form of arcs of a circle; b) with ET connecting CP, in the form of line segments; c) TNT is 300 ACT, where: 900 is IP; 901 is CP; 902 is ET; 903 is the number of ACT; 904 is the sequence of actuated sensors (IS, SCP) during description of ACT.

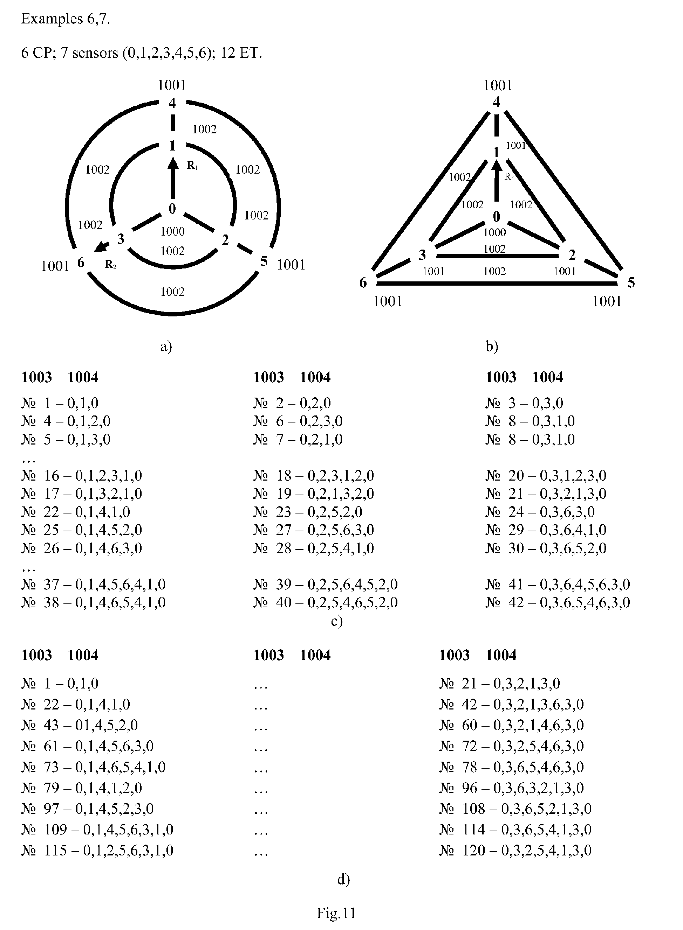

11. Fig. 11. A set ACT with 6 CP on 2 circles without stops and pressure (embodiment), a) with ET connecting CP, in the form of arcs of a circle; b) with ET connecting CP, in the form of line segments; c) TNT without passages from one circle to another is 42 ACT; d) TNT with passages from one circle to another is 120 ACT, where: 1000 is IP, 1001 is CP, 1002 is ET; 1003 is the number of ACT; 1004 is sequence of actuated sensors (IS, SCP) during description of ACT.

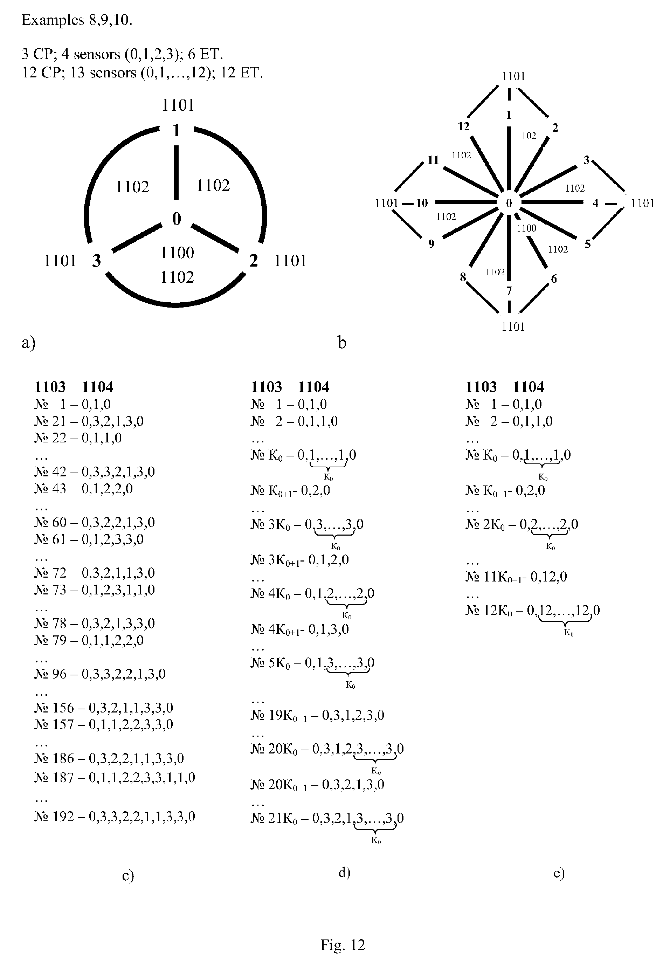

12. Fig. 12. A set of ACT with a stop (embodiment); a) with three CP and ET, connecting CP, in the form of arcs of a circle; b) with 12 CP and without ET connecting CP; c) TNT with three CP and a stop at any CP if K = 2 is 192 ACT; d) TNT is with three CP and stop in the last CP if $k = K_o$ is 21 x Ko ACT; e) TNT is with 12 CP without connecting CP and a stop at any CP if $k = K_o$ is 12 x $K_o$ ACT, where: 1100 is IP; 1101 is CP; 1102 is ET; 1103 is the number of ACT; 1104 is sequence of actuated sensors (IS, SCP) during description of ACT.

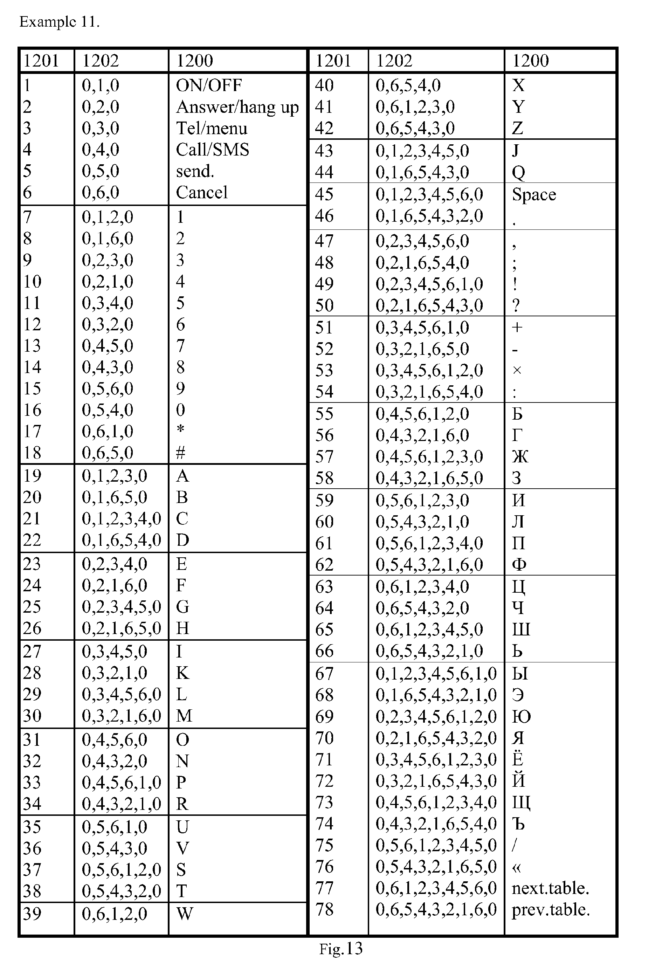

13. Fig. 13. TI with 78 ACT, for a cell telephone (with service commands, figures, signs, letters of Latin and Russian alphabets) and TNT is with 6 CP (7 sensors; 12 ET) without stops and pressure (see Fig. 8) (Embodiment), where: 1200 is an entered symbol (command, figure, sign, character); 1201 is the number of ACT; 1202 is sequence of actuated sensors (IS, SCP) during description of ACT.

## 5. Realization of the invention.

The group of inventions (see subsection 3.1) MII by description of ACT, DII by description of ACT, DSCP can be manufactured, they can be made to accomplish the said goals at the present day level of technologies, the problems connected with their manufacturing are connected with development of highly efficient technologies, ensuring reliability and extended service life of D by description of ACT, since the mechanical part of the MU that ensures description of ACT in some of the proposed embodiments is more mechanically complex than those of the conventional, which the said invention is proposed to replace.

## Claims

1. The method for inputting information (MII) by description of allowable trajectories (AT), implementing at least one device (D) for inputting information (DII) by description of AT, implementing the DII that can be either an independent D, or an independent unit of other D, or component of other D, the user inputs information, which is a finite sequence of alphabetical, numeric, sign, graphic, phonetic, stenographic, topographic, music and other symbols and/or symbols of commands, used for presentation and/or processing, and/or control in different D and systems in various fields of engineering, science, culture and everyday life, the input information (II) is determined by the number of the described AT according to the table of information (TI) actualised at the moment of input from a nonempty set of TI (STI), and the DII can be of the mono or poly-unit (modular) design, the DII comprises a case (C), at least one manipulator unit (MU), used for description of AT, with sensors of at least one of the known types, and the said DII can comprise[3] a processor (micro controller) (P), random access memory (RAM), built-in read- memory (BROM), built-in flash memory (BFM), display (DU), loudspeaker(s) and/or headphones (L/H), synthesizer of signs (SS), voice synthesizer (VS), information exchange unit (IEU), electrical power unit (EPU), the number of the described AT is determined by hardware or software according to the sequence of sensors of the used MU actuated during such description; the AT is described using auxiliary information and/or means; control (i.e. monitoring) description of AT may be visual on MU and/or DU and/or audio through L/H; control over II may be visual on DU and/or audio through L/H and corrected at MU, then the said II is used for control of DII, sent through the conventional communication channels to other D or through the interface to other units or components of D, containing this DII, which use the information, and the said DII is **characterized by the following:**

- the AT is described from at least one finite numbered set of the allowable closed trajectories (ACT), for this purpose using MU of DII, which ensures possibility of description of only such trajectories;
- the described set of ACT is the numbered subset of one of the sets of all possible AT that are **characterized by**: presence of common initial point (IP), closeness (i.e. the end point coincides with the IP), presence of the set of the numbered characteristic points (CP), located at intersections of outgoing from IP 3, 4, 6, 8, 12 rays with the angles between the adjacent rays 120°, 90°, 60°, 45°, 30° with at least one circle (preferably with 1, 2, 3, 4) with its centre in the IP, the set of elements of trajectories (ET), which are line segments, connecting the IP with the CP, the arcs of circles or line segments, connecting CP between themselves (the location of CP is also possible in other clearly determinable and easily found points, for example, in the corners and on the sides of triangles or squares);
- the common IP is associated with the initiating sensor (IS); each CP is associated with the numbered sensor of the characteristic point (SCP), IS and SCP can be the "general sensor of the characteristic point" (GSCP) (the set of sensors with certain a concept of actuation) or the "virtual sensor of the characteristic point" (VSCP) (which actuation is determined by calculation according to the data of sensors). IS and the set of all SCP (GSCP, VSCP) can be made in the form of the special miniature electronic D of sensors of characteristic points (DSCP) according to particular embodiments of the MU of DII;
- the description of ACT is performed according to particular embodiments (types) of MU of DII by finger on touch display (TD), touch pad (TP) or panel of sensors (PS), by finger with a marker on TD, TP or PS, by finger using keys (button, slider, disk, switch, regulator), by hand with a marker (stylus, pen) on TD or TP, by hand using a handle (joystick, mouse, steering wheel, steering control, switch, regulator), by hand with MU of DII or DII in the space, or by foot using a pedal, PS etc.;
- the MU of DII is preferably located in the place more suitable for information input (in the particular embodiments of MU of DII by finger, hand or foot); the IP is to be located preferably in the place which the user can easily remember and find on MU; the IP and preferably the CP and/or ET are visually and/or tactilly marked on MU; the key, handle or the pedal should preferably be fixed to IP and their any movement is allowed only along the ET of ACT;
- description of ACT begins in IP, then the IS is actuated, i.e. it sends a signal into its line or its own signal or its number into the common line;
- description of ACT by the ET is performed from IP to one of neighbouring CP (i.e. on the nearest to IP circle), from one CP to one of neighbouring CP (i.e. on the same circle or the same ray), passage through CP actuates the associated SCP (GSCP, VSCP), while actuation of other SCP is excluded with high probability and description of ACT is preferably performed without change of direction of rotation either clockwise or counter clockwise in the range of one (full) rotation (for easier memorization, acquisition of skills of input to the instinctive level and increase of speed of input);
- the MU of DII is made in such a way that SCP, corresponding to CP passed through during description ACT, is considered actuated according to the embodiment MU of DII without stops and pressure one time, irrespective of time of stop (delay) in this CP (in the field sensitivity of respective SCP) and pressure force on SCP in CP, according to the embodiment MU of DII with stops or pressure n or m times accordingly

$$n = \min (k, 1 + E (T/\Delta T)),$$

$$m = \min (k, 1 + E (G/\Delta G)),$$

where: k is the maximum accountable number of actuations of SCP of this CP (it is possible different for different CP), E (x) is the integer part of x, T is the time of stop (delay) in this CP, $\Delta T$ is the period between actuations of sensors, G is the pressure force on SCP in CP, $\Delta G$ is the increment of pressure on sensor; according to the embodiment with stops or pressure, quantity of ACT and respectively volume of II essentially increases;

- control over passing through the IP and CP and/or actuation of IS and SCP is visual using MU or DU and/or audio through L/H and/or preferably tactile;
- description of ACT is finished in the IP, and the IS is actuated;
- the number of described ACT is determined by hardware or software according to the table of the numbers of trajectories (TNT), establishing a univocal correspondence between the number of ACT and the sequence of the numbers of SCP (GSCP, VSCP) actuated during description;
- TNT is preferably made in such a way so that it would be easily and naturally memorized in association with the description of ACT;
- control over the II is visual on D and/or audio through L/H and/or tactile (for blind and vision-impaired persons (BVIP), preferably on the Braille DU of the creeping line type), the mistakenly entered symbol (ES) is cancelled preferably by description of the specific (corrective) ACT;
- replacement of the actualised TI for another from the STI is done preferably by description of the specific ACT;
- STI is made changeable, modifiable or unchangeable, it is preferably made in such a fashion that various TI contain information of various meaning (e.g., register shifts, change of alphabets, controlled D, etc), have the order according to the frequency of use and/or sequence of use, information contained in TI have the order according to the meaning and/or tradition (e.g., alphabet, numerical row) so that to facilitate easy memorization, and to possibly minimize the average time of information input (e.g., the most frequently input symbols correspond to the simplest ACT);
- training for acquisition of skills of information input is done by using DII, using auxiliary information and/or means and control of description of ACT (passing CP and actuating SCP) and control of the II; in the process of training the information input skills are preferably honed to an instinctive level, then the auxiliary information and means and control over description of ACT are preferably switched off, and information input is preferably accomplished by blind method (BM).

[3] All or a part of these units can be absent, if their functions perform similar units of D, where information is entered and/or where DII is a unit or component.

2. **MII by description of AT according to claim 1 (hereinafter referred to as MII by description of ACT), is characterized by the following:**

- it can replace and is intended to replace MII using DII of the type TD, TP, PS, keyboard (key, button, slider, disk, switch, regulator), handle (joystick, mouse, switch, regulator, steering wheel, steering control), pedal, PS etc in various D in various fields of engineering, science, culture and everyday life;
- it increases quality of information processing and control, allows an increase of volume and speed of information input, reduces the time required for information input, probability of mistakes and probability of leaving any input mistake s unnoticed, allows training for acquisition of input skills to the instinctive level and inputting information by BM;
- it reduces dimensions, weight, and costs of DII, increases their operational characteristics and simplifies the design.

3. **DII by description of AT**, which can be either an independent D (ensuring information input in other D through the standard communication channels), or an independent unit of other D (ensuring information input into these D through the interface hardware), or a component (sub-unit) of other D (solving the problem of information input into these D); it is used for inputting information, which is a finite sequence of alphabetical, numeric, sign, graphic, phonetic, stenographic, topographic, music and other symbols and/or symbols of commands, to be used for presentation and/or processing and/or control in different D and systems (informational, computing, communication, control, electrical engineering, radio engineering, controlling and measuring, armament and military equipment, heavy industries, machine-tool construction, automobile, railroad, air, sea and river transport, education and training, sports, games, etc) in various fields of engineering, science, culture and everyday life; it determines II by the number of the described AT according to the actualised at the moment of input from nonempty STI ; it can be of the mono or poly-unit (modular) design, it comprises a C, at least one MU used for description of AT with the sensors of at least one of the known types (electro-mechanic, capacitive, induction, electromagnetic, piezoelectric, photoelectric, laser, inertial, etc.), can comprise[4] P, RAM, BROM, BFM, DU, L/H, SS, VS, IEU, EPU; it determines the number of the described AT using hardware or software by sequence of sensors of MU actuated during such description, allows to describe of AT using auxiliary information and/or means; control (i.e. monitoring) description of AT may be visual on MU and/or DU and/or audio through L/H, it provides possibility to control over the II visually on DU and/or audio through L/H and to correct the II at MU; to use the II to control the DII or to send the II through the conventional communication channels to other D or through the interface to other units or components of [4]All or a part of these units can be absent, if their functions perform similar units of D, where information is entered and/or where DII is a unit or component.

D, containing this DII, which use the information; the said DII is **characterized by the following:**

- it uses the MII by description of ACT and is used in the said MII;
- the MU makes it possible to describe AT from at least one finite numbered set of ACT of the MU and only such trajectories;
- the described set of ACT is the numbered subset of one of the sets of all possible AT that are **characterized by**: presence of common IP, closedess (i.e. the end point coincides with the IP), presence of the set of the numbered CP, located at intersections of outgoing from IP 3, 4, 6, 8, 12 rays with the angles between the adjacent rays 120°, 90°, 60°, 45°, 30° with at least one circle (preferably with 1, 2, 3, 4) with its centre in the IP, the set of ET, which are line segments, connecting the IP with the CP, the arcs of circles or line segments, connecting CP between themselves. (The location of CP is also possible in other clearly determinable and easily found points, for example, in the corners and on the sides of triangles or squares);
- the common IP of MU is associated with the IS; each CP is associated with the numbered SCP, IS and SCP can be the GSCP (the set of sensors with certain a concept of actuation) or the VSCP (which actuation is determined by calculation according to the data of sensors). The IS and the set of all SCP (GSCP, VSCP) can be made in the form of the special miniature electronic DSCP according to particular embodiments of MU of DII;
- it is made according to particular embodiments (types) of MU, where description of ACT is performed by finger on TD, TP, PS, by finger with a marker on TD, TP, PS, by finger using keys (button, slider, disk, switch, regulator), by hand with a marker (stylus, pen) on TD or TP, by hand using a handle (joystick, mouse, steering wheel, steering control, switch, regulator), by hand with MU of DII or DII in the space, or by foot using a pedal, PS, etc.;
- the MU of DII is preferably located in the place more suitable for information input (in the particular embodiments of MU of DII by finger, hand or foot); the IP is to be preferably located in the place which the user can easily remember and find on the MU; the IP and preferably the CP and/or ET are visually and/or tactilly marked on the MU; the key, handle or the pedal should preferably be fixed to IP and their any movement is allowed only along the ET of ACT;
- description of ACT begins in IP, then the IS is actuated, i.e. it sends a signal into its line or its own signal or its number into the common line;
- description of ACT by the ET is performed from IP to one of neighbouring CP (i.e. on the nearest to IP circle), from one CP to one of neighbouring CP (i.e. on the same circle or the same ray), passage through CP actuates the associated SCP (GSCP, VSCP), while actuation of other SCP is excluded with high probability, and description of ACT is preferably performed without change of direction of rotation either clockwise or counter clockwise in the range of one (full) rotation (for easier memorization, acquisition of skills of input to the instinctive level and increase of speed of input);
- the MU of DII is made in such a way that SCP, corresponding to CP passed through during description ACT, is considered actuated according to the embodiment MU of DII without stops and pressure one time, irrespective of time of stop (delay) in this CP (in the field sensitivity of respective SCP) and pressure force on SCP in CP, according to the embodiment MU of DII with stops or pressure n or m times accordingly

$$n = \min(k, 1 + E(T/\Delta T)),$$
$$m = \min(k, 1 + E(G/\Delta G)),$$

where: k is the maximum accountable number of actuations of SCP of this CP (it is possible different for different CP), E(x) is the integer part of x, T is the time of stop (delay) in this CP, $\Delta T$ is the period between actuations of sensors, G is the pressure force on SCP in CP, $\Delta G$ is the increment of pressure on sensor; according to the embodiment with stops or pressure, quantity of ACT and respectively volume of II significantly increases;

- it allows to control over passing through the IP and CP and/or actuation of IS and SCP is visual on MU or DU and/or audio through L/H and/or preferably tactile;
- description of ACT on MU is finished in the IP, and the IS is actuated;
- the number of described ACT on MU is determined by hardware or software according to TNT, establishing a univocal correspondence between the number of ACT and the sequence of the numbers of SCP (GSCP, VSCP) actuated at its description;
- TNT is preferably made in such a way so that it would be easily and naturally memorized in association with description of ACT;
- it allows to control over the II visually on D and/or audio through L/H and/or tactilly (for BVIP, preferably on the Braille DU of the creeping line type) and to cancel the mistakenly ES preferably by description of the specific ACT;
- it allows replacement of the actualised TI for another from the STI preferably by description of the specific ACT;
- STI can be made changeable, modifiable or unchangeable, it is preferably made in such a fashion that various TI contain information of various meaning (e.g., register shifts, change of alphabets, controlled D, etc), have the order according to the frequency of use and/or sequence of use; information contained in TI have the order according to the meaning and/or tradition (e.g., alphabet, numerical row) so that to facilitate easy memorization, and to possibly minimize the average time of information input (e.g., the most frequently input symbols correspond to the simplest ACT);

- it ensures possibility effective training for information input using auxiliary information and/or means and control of description of ACT (passing CP and actuating SCP) and control of the II; in the process of training the information input skills are preferably honed to an instinctive level, then the auxiliary information and means and control over description of ACT are preferably switched off, and information input is preferably accomplished by BM.

4. **DII by description of AT according to claim 3 (hereinafter referred to as DII by description of ACT), is characterized by the following:**

- it can replace and is intended to replace DII of the type TD, TP, PS,
keyboard (key, button, slider, disk, switch, regulator), handle (joystick, mouse, switch, regulator, steering wheel, steering control), pedal, PS, etc in various D in various fields of engineering, science, culture and everyday life.
- it increases quality of information processing and control, increases the volume and speed of information input, reduces the time required for information input, probability of mistakes and probability of leaving any input mistake s unnoticed, allows training for acquisition of input skills to the instinctive level and inputting information by BM;
- it reduces dimensions, weight, and costs of DII, increases their operational characteristics and simplifies the design.

5. **DII by description of ACT according to claims 3 and 4 characterized by the following:**

- the MU is made according to certain embodiments with TD (i.e. MU and DU are combined), TP, PS, with or without a marker attached to finger, or with a hand-held marker (stylus, pen), or in a particular combined embodiment with or without a marker;
- description of ACT is accomplished by finger, by finger with an attached marker or with a hand-held marker (stylus, pen);
- according to particular embodiments the MU can be with one or several sets of ACT that might differ by location, size, the number of rays, the number of circles, ET (line segments or arcs), with or without counting stops or pressure, the maximal accounted actuated number of SCP; replacement of the actualised at the moment of input set of ACT and the corresponding TNT is preferably done by description of the specific ACT;

- the IS and SCP in the embodiments with implementation of TD and TP are the GSCP, and in the embodiments with PS they are either sensors or VSCP;
- the TD, TP, PS preferably DU bear visual markings (displayed on TD and DU) and/or tactile markings (preferably on TP and PS, especially for the BVIP) IP and preferably the CP and ET, which correspond to either to the actualised or all present in/on MU sets of ACT;
- it provides the possibility of control of placement of finger, finger with an attached marker (stylus, pen) in IP as well as control over passing through CP and/or actuation of IS and SCP (taking into account the time of stop or the force of pressure for the MU embodiments where such features are implemented), which can be done visually on MU or DU and/or preferably audio through L/H and/or tactilly (preferably in the embodiments with TP and PS, especially for information input by BM and by the BVIP).

6. **DII by description of ACT, according to claims 3 and 4 is characterized by the following:**

- the MU is made according to certain embodiments with a key, button, slider, dial, switch, spherical switch, regulator, etc.;
- description of ACT is made by finger implementing one of above mentioned embodiments of MU;
- according to particular embodiments the MU can be with one or several sets of ACT, the latter preferably being subsets of a single set of ACT; replacement of the actualised set of ACT and the corresponding TNT is preferably done by description of the specific ACT;
- the IS and SCP can be sensors of one of the known types (electro-mechanical, capacitive, induction, electromagnetic, piezoelectric, photoelectric, laser, etc), or various embodiments of the DSCP according to particular embodiments the MU;
- the MU is fixed in the IP and allows passage through the ET only (i.e. describing the ACT only) preferably of the actualised set of ACT;
- the MU preferably bears visual and/or tactile markings of CP and ET that correspond to the actualised or all featured sets of ACT;

- it allows to control over passage of CP and/or actualisation of SCP (taking into account the time of stop or force of pressure according to the embodiment MU that have such features) visually on MU or DU and/or preferably audio through L/H and/or tactilly (especially for information input by BM and by the BVIP).

7. DII by description of ACT according to claims 3 and 4 characterized by the following:

- the MU is made according to certain embodiments in the form of a handle, joystick, mouse, lever, switch, spherical switch, regulator, rudder, steering wheel, or etc.;
- description of ACT is carried out by right, left, or one of hands implementing one of above mentioned embodiments of MU;
- according to particular embodiments the MU can be with one or several sets of ACT, the latter preferably being subsets of a single set of ACT; replacement of an actualised set of ACT and the corresponding TNT is preferably done by description of the specific ACT;
- the IS and SCP can be sensors of one of the known types (electro-mechanical, capacitive, induction, electromagnetic, piezoelectric, photoelectric, laser, etc), or various embodiments of the DSCP according to particular embodiments the MU;
- the MU is fixed in the IP and allows passage through the ET only (i.e. describing the ACT only) preferably of the actualised set of ACT;
- the MU preferably bears visual and/or tactile markings of CP and ET that correspond to the actualised or all featured sets of ACT;
- it allows to control over passage of CP and/or actualisation of SCP (taking into account the time of stop or force of pressure according to the embodiment of MU that have such features) visually on MU or DU and/or preferably audio through L/H and/or tactilly (especially for information input by BM and by the BVIP).

8. DII by description of ACT according to claims 3 and 4 is characterized by the following:

- the MU is made of the type of a pedal or PS;
- description of ACT is carried out by either right, or left, or one of the feet implementing one of above mentioned embodiments of MU;
- MU is made preferably with one simple set of ACT, with 3, 4, 6, 8 rays, with one circle, or without stops and pressure, or with the counted stops or pressures preferably in the last (previous to returning to IP) CP, preferably ACT, different by the time of stops or force of pressure in the last CP, correspond to the symbols that differ quantitatively and determined by the time of stops or force of pressure;
- MU is made preferably with IS and SCP of one of the known types of sensors, in embodiment of PS being sensors or VSCP;
- the pedal is fixed in IP and allows motion only along ET of ACT (i.e. describing ACT);
- it provides the possibility of control of placement of foot in IP of PS as well as control over passing through CP of pedal or foot and/or actuation of IS and SCP (taking into account the time of stop or the force of pressure according to the embodiment of MU that has such features), which can be done visually on MU or DU and/or, preferably, audio through L/H, and/or tactilly.

9. DII by description of ACT according to claims 3 and 4 is characterized by the following:

- the MU is made of the type of an inertial system;
- description of ACT is done by hand with MU, or DII in the space;
- the MU is preferably with one simple set of ACT, with 4, 6, 8 rays, with one circle, or two circles in two perpendicular planes, without stops or pressure;
- IS is of the kind of a key (button), while SCP is VSCP on a basis of inertial sensors of one of the known types, or a special miniature electronic DSCP;
- it provides possibility of control over actuation of SCP visually on DU and/or audio through L/H.

10. DII by description of ACT according to claims 3 and 4 is characterized by the following:

- it is made in the embodiment with at least two combined MU, MU is preferably of the type of a handle (joystick, mouse, lever, etc) with at least one MU preferably of the type of a key (button, slider, dialling disk, etc) or of the type TP (TD, PS);
- description of ACT using MU of the type of a handle is done by hand, while description of ACT using MU of the type of a key or TP is done by finger;
- it is preferably made with distribution of functions between MU with a type of a handle and MU of the type of a key or TP, e.g. the MU of the type of a handle is designed for input of the most important information or control commands, while MU of the type of a key or TP is designed for input of auxiliary (additional, service) information.

11. DSCP is a special miniature electronic D of sensors on the basis of sensors of at least of one of the known types (electro-mechanical, capacitor, induction, electromagnetic, piezoelectric, photoelectric, laser, inertial etc.) and be of an integrated circuit, electromagnetic, opt electronic, opt magnetic, or inertial type, **it is characterized by the following:**

- it combines or integrates in a uniform D a IS and the set of SCP of MU of the proposed DII by description of ACT of the above-described embodiments;

- it provides interaction with mechanical components of MU of the proposed embodiments of DII describing ACT, preferably with a type of a key (button, slider, dial, switch, spherical switch, regulator), handle (joystick, mouse, lever, switch, spherical switch, rudder, steering wheel, regulator), pedal, PS, inertial system; it records the passage of IP and CP ACT of MU;

- it provides interaction with electronic units (P, RAM) of the proposed embodiments of DII, issues the numbers or sequences of the numbers of the sensors (IS, SCP) actuated during such description of ACT (taking into account of time of stop or force of pressure according to the embodiment MU that have such features).

001  002  003

a)   b)   c)

007   008   009

004   005   006

d)   e)   f)

011
1
012   012
0
011  3   010   2  011
012

g)

**014**

| **015** | **016** | | **015** | **016** |
|---|---|---|---|---|
| № 1 – 0,1,0 | … | | № 3 – 0,3,0 | |
| № 4 – 0,1,2,0 | … | | № 8 – 0,3,1,0 | |
| № 5 – 0,1,3,0 | … | | № 9 – 0,3,2,0 | |
| … | | | | |
| №16 – 0,1,2,3,1,0 … | | № 20 – 0,3,1,2,3,0 | | |
| № 17 – 0,1,3,2,1,0 … | | № 21 – 0,3,2,1,3,0 | | |

Fig. 1

Fig.2

[1] It can be absent

Fig. 3

1) It can be absent

Fig. 4

[1] It can be absent

Fig.5

The samples of the act set.

The number of CP is from 3 to 36. They are located on out going rays beginning at IP, the number of rays can be 3, 4, 6, 8, 12 and the angle going between the adjacent rays can be $120^0$, $90^0$, $60^0$, $45^0$, $30^0$ on the concentric circles and in the corners and sides of triangles or squares.

Examples 1 – 7 for devices without stops and pressure.

Example 1.

21 ACT, 3 CP; 4 sensors (0,1,2,3); 6 ET, (3 line segments, connecting IP (0) with CP (1,2,3) with $120^0$ angles between a) the adjacent line segments and three arcs, connecting CP 1 and 2 (2 and 1), 2 and 3 (3 and 2), 3 and 1 (1 and 3) b) or line segments connecting these points c) or in the corners of the square.

| 503 | 504 | | 503 | 504 | | 503 | 504 |
|---|---|---|---|---|---|---|---|
| № 1 – 0,1,0 | | | № 2 – 0,2,0 | | | № 3 – 0,3,0 | |
| № 4 – 0,1,2,0 | | | № 6 – 0,2,3,0 | | | № 8 – 0,3,1,0 | |
| № 5 – 0,1,3,0 | | | № 7 – 0,2,1,0 | | | № 9 – 0,3,2,0 | |
| № 10 – 0,1,2,3 | | | № 12 – 0,2,3,1,0 | | | № 14– 0,3,1,2,0 | |
| № 11– 0,1,3,20 | | | № 13 – 0,2,1,3,0 | | | № 15 – 0,3,2,1,0 | |
| № 16 – 0,1,2,3,1,0 | | | № 18 – 0,2,3,1,2,0 | | | № 20 – 0,3,1,2,3,0 | |
| № 17 – 0,1,3,2,1,0 | | | № 19 – 0,2,1,3,2,0 | | | № 21 – 0,3,2,3,0 | |

d)

Fig.6

Example 2.

a) 36 ACT, 4 CP; 5 sensors (0,1,2,3,4); 8 ET (4 line segments connecting IP (0) with the circle, with $90^0$ angle) between adjacent line segments and 4 arcs connecting CP 1 and 2 (2 and 1), 1 and 4 (4 and 1), 2 and 3 (3 and 2), 3 and 4 (4 and 3). Arcs can be replaced with line segments connecting same points b), c)

a)

b)

c)

**603    604**

№ 1 – 0,1,0         ...
№ 5 – 0,1,2,0       ...
№ 13 – 0,3,1,0      ...
№ 21 – 0,1,2,3,4,0  ...
№ 29 – 0,1,2,3,4,1,0 ...

**603    604**

№ 4 – 0,4,0
№ 12 – 0,4,3,0
№ 20 – 0,4,3,2,0
№ 28 – 0,4,3.2,1,0
№ 36 – 0,4,3,2,1,4,0

d)

Fig.7

Example 3.

78 ACT, 6 CP; 7 sensors (0,1,...,6); 12 ET.

a)

b)

c)

| 703 | 704 | | 703 | 704 |
|---|---|---|---|---|
| № 1 – 0,1,0 | | ... | № 6 – 0,6,0 | |
| № 7 – 0,1,2,0 | | ... | № 18 – 0,6,5,0 | |
| № 19 – 0,1,2,3,0 | | ... | № 30 – 0,6,5,4,0 | |
| № 31 – 0,1,2,3,4,0 | | ... | № 42 – 0,6,5,4,3,0 | |
| № 43 – 0,1,2,3,4,5,6,0 | | ... | № 66 – 0,6,5,4,3,2,1,0 | |
| № 67 – 0,1,2,3,4,5,6,1,0 | | ... | № 78 – 0,6,5,4,3,2,1,6,0 | |

d)

Fig.8

Example 4.

136 ACT, 8 CP; 9 sensors (0,1,…,8); 16 ET.

a)

b)

c)

| 803 | 804 | | 803 | 804 |
|-----|-----|-----|-----|-----|
| № 1 – 0,1,0 | … | | № 8 – 0,8,0 | |
| № 9 – 0,1,2,0 | … | | № 18 – 0,8,7,0 | |
| № 25 – 0,1,2,3,0 | … | | № 30 – 0,8,7,6,0 | |
| … | … | | … | |
| № 105 – 0,1,2,3,4,5,6,7,8,0 | … | | № 120 – 0,8,7,6,5,4,3,2,1,0 | |
| № 121 – 0,1,2,3,4,5,6,7,8,1,0 | … | | № 136 – 0,8,7,6,5,4,3,2,1,8,0 | |

d)

Fig.9

Example 5.

300 ACT, 12 CP; 13 sensors (0,1,...,12); 24 ET.

a)

b)

№ 1 – 0,1,0

№ 13 – 0,1,2,0

№ 37 – 0,1,2,3,0

...

№ 253 – 0,1,2,3,4,5,6,7,8,9,10,11,12,0

№ 277 – 0,1,2,3,4,5,6,7,8,9,10,11,12,1,0

c)

903    904

...    № 12 – 0,12,0

...    № 36 – 0,12,11,0

...    № 60 – 0,12,11,10,0

...    ...

...    № 276 – 0,12,11,10,9,8,7,6,5,4,3,2,1,0

...    № 300 – 0, 12,11,10,9,8,7,6,5,4,3,2,1,12,0

Fig.10

Examples 6,7.

6 CP; 7 sensors (0,1,2,3,4,5,6); 12 ET.

a)

b)

| 1003 | 1004 | 1003 | 1004 | 1003 | 1004 |
|------|------|------|------|------|------|

№ 1 – 0,1,0

№ 4 – 0,1,2,0

№ 5 – 0,1,3,0

...

№ 16 – 0,1,2,3,1,0

№ 17 – 0,1,3,2,1,0

№ 22 – 0,1,4,1,0

№ 25 – 0,1,4,5,2,0

№ 26 – 0,1,4,6,3,0

...

№ 37 – 0,1,4,5,6,4,1,0

№ 38 – 0,1,4,6,5,4,1,0

№ 2 – 0,2,0

№ 6 – 0,2,3,0

№ 7 – 0,2,1,0

№ 18 – 0,2,3,1,2,0

№ 19 – 0,2,1,3,2,0

№ 23 – 0,2,5,2,0

№ 27 – 0,2,5,6,3,0

№ 28 – 0,2,5,4,1,0

№ 39 – 0,2,5,6,4,5,2,0

№ 40 – 0,2,5,4,6,5,2,0

№ 3 – 0,3,0

№ 8 – 0,3,1,0

№ 8 – 0,3,1,0

№ 20 – 0,3,1,2,3,0

№ 21 – 0,3,2,1,3,0

№ 24 – 0,3,6,3,0

№ 29 – 0,3,6,4,1,0

№ 30 – 0,3,6,5,2,0

№ 41 – 0,3,6,4,5,6,3,0

№ 42 – 0,3,6,5,4,6,3,0

c)

| 1003 | 1004 | 1003 | 1004 | 1003 | 1004 |
|------|------|------|------|------|------|

№ 1 – 0,1,0

№ 22 – 0,1,4,1,0

№ 43 – 01,4,5,2,0

№ 61 – 0,1,4,5,6,3,0

№ 73 – 0,1,4,6,5,4,1,0

№ 79 – 0,1,4,1,2,0

№ 97 – 0,1,4,5,2,3,0

№ 109 – 0,1,4,5,6,3,1,0

№ 115 – 0,1,2,5,6,3,1,0

...

...

...

...

...

...

...

...

...

№ 21 – 0,3,2,1,3,0

№ 42 – 0,3,2,1,3,6,3,0

№ 60 – 0,3,2,1,4,6,3,0

№ 72 – 0,3,2,5,4,6,3,0

№ 78 – 0,3,6,5,4,6,3,0

№ 96 – 0,3,6,3,2,1,3,0

№ 108 – 0,3,6,5,2,1,3,0

№ 114 – 0,3,6,5,4,1,3,0

№ 120 – 0,3,2,5,4,1,3,0

d)

Fig.11

Examples 8,9,10.

3 CP; 4 sensors (0,1,2,3); 6 ET.
12 CP; 13 sensors (0,1,...,12); 12 ET.

a)

b)

**1103   1104**
№  1 – 0,1,0
№ 21 – 0,3,2,1,3,0
№ 22 – 0,1,1,0
...
№ 42 – 0,3,3,2,1,3,0
№ 43 – 0,1,2,2,0
...
№ 60 – 0,3,2,2,1,3,0
№ 61 – 0,1,2,3,3,0
...
№ 72 – 0,3,2,1,1,3,0
№ 73 – 0,1,2,3,1,1,0
...
№ 78 – 0,3,2,1,3,3,0
№ 79 – 0,1,1,2,2,0
...
№ 96 – 0,3,3,2,2,1,3,0
...
№ 156 – 0,3,2,1,1,3,3,0
№ 157 – 0,1,1,2,2,3,3,0
...
№ 186 – 0,3,2,2,1,1,3,3,0
№ 187 – 0,1,1,2,2,3,3,1,1,0
...
№ 192 – 0,3,3,2,2,1,1,3,3,0

c)

**1103   1104**
№  1 – 0,1,0
№  2 – 0,1,1,0
...
№ $K_0$ – $0,\underbrace{1,\ldots,1}_{K_0},0$
№ $K_{0+1}$- 0,2,0
...
№ $3K_0$ – $0,\underbrace{3,\ldots,3}_{K_0},0$
№ $3K_{0+1}$- 0,1,2,0
...
№ $4K_0$ – $0,1,\underbrace{2,\ldots,2}_{K_0},0$
№ $4K_{0+1}$- 0,1,3,0
...
№ $5K_0$ – $0,1,\underbrace{3,\ldots,3}_{K_0},0$
...
№ $19K_{0+1}$ – 0,3,1,2,3,0
...
№ $20K_0$ – $0,3,1,2,\underbrace{3,\ldots,3}_{K_0},0$
№ $20K_{0+1}$ – 0,3,2,1,3,0
...
№ $21K_0$ – $0,3,2,1,\underbrace{3,\ldots,3}_{K_0},0$

d)

**1103   1104**
№  1 – 0,1,0
№  2 – 0,1,1,0
...
№ $K_0$ – $0,\underbrace{1,\ldots,1}_{K_0},0$
№ $K_{0+1}$- 0,2,0
...
№ $2K_0$ – $0,\underbrace{2,\ldots,2}_{K_0},0$
...
№ $11K_{0+1}$- 0,12,0
...
№ $12K_0$ – $0,\underbrace{12,\ldots,12}_{K_0},0$

e)

Fig. 12

Example 11.

| 1201 | 1202 | 1200 | 1201 | 1202 | 1200 |
|---|---|---|---|---|---|
| 1 | 0,1,0 | ON/OFF | 40 | 0,6,5,4,0 | X |
| 2 | 0,2,0 | Answer/hang up | 41 | 0,6,1,2,3,0 | Y |
| 3 | 0,3,0 | Tel/menu | 42 | 0,6,5,4,3,0 | Z |
| 4 | 0,4,0 | Call/SMS | 43 | 0,1,2,3,4,5,0 | J |
| 5 | 0,5,0 | send. | 44 | 0,1,6,5,4,3,0 | Q |
| 6 | 0,6,0 | Cancel | 45 | 0,1,2,3,4,5,6,0 | Space |
| 7 | 0,1,2,0 | 1 | 46 | 0,1,6,5,4,3,2,0 | . |
| 8 | 0,1,6,0 | 2 | 47 | 0,2,3,4,5,6,0 | , |
| 9 | 0,2,3,0 | 3 | 48 | 0,2,1,6,5,4,0 | ; |
| 10 | 0,2,1,0 | 4 | 49 | 0,2,3,4,5,6,1,0 | ! |
| 11 | 0,3,4,0 | 5 | 50 | 0,2,1,6,5,4,3,0 | ? |
| 12 | 0,3,2,0 | 6 | 51 | 0,3,4,5,6,1,0 | + |
| 13 | 0,4,5,0 | 7 | 52 | 0,3,2,1,6,5,0 | - |
| 14 | 0,4,3,0 | 8 | 53 | 0,3,4,5,6,1,2,0 | × |
| 15 | 0,5,6,0 | 9 | 54 | 0,3,2,1,6,5,4,0 | : |
| 16 | 0,5,4,0 | 0 | 55 | 0,4,5,6,1,2,0 | Б |
| 17 | 0,6,1,0 | * | 56 | 0,4,3,2,1,6,0 | Г |
| 18 | 0,6,5,0 | # | 57 | 0,4,5,6,1,2,3,0 | Ж |
| 19 | 0,1,2,3,0 | A | 58 | 0,4,3,2,1,6,5,0 | З |
| 20 | 0,1,6,5,0 | B | 59 | 0,5,6,1,2,3,0 | И |
| 21 | 0,1,2,3,4,0 | C | 60 | 0,5,4,3,2,1,0 | Л |
| 22 | 0,1,6,5,4,0 | D | 61 | 0,5,6,1,2,3,4,0 | П |
| 23 | 0,2,3,4,0 | E | 62 | 0,5,4,3,2,1,6,0 | Ф |
| 24 | 0,2,1,6,0 | F | 63 | 0,6,1,2,3,4,0 | Ц |
| 25 | 0,2,3,4,5,0 | G | 64 | 0,6,5,4,3,2,0 | Ч |
| 26 | 0,2,1,6,5,0 | H | 65 | 0,6,1,2,3,4,5,0 | Ш |
| 27 | 0,3,4,5,0 | I | 66 | 0,6,5,4,3,2,1,0 | Ь |
| 28 | 0,3,2,1,0 | K | 67 | 0,1,2,3,4,5,6,1,0 | Ы |
| 29 | 0,3,4,5,6,0 | L | 68 | 0,1,6,5,4,3,2,1,0 | Э |
| 30 | 0,3,2,1,6,0 | M | 69 | 0,2,3,4,5,6,1,2,0 | Ю |
| 31 | 0,4,5,6,0 | O | 70 | 0,2,1,6,5,4,3,2,0 | Я |
| 32 | 0,4,3,2,0 | N | 71 | 0,3,4,5,6,1,2,3,0 | Ё |
| 33 | 0,4,5,6,1,0 | P | 72 | 0,3,2,1,6,5,4,3,0 | Й |
| 34 | 0,4,3,2,1,0 | R | 73 | 0,4,5,6,1,2,3,4,0 | Щ |
| 35 | 0,5,6,1,0 | U | 74 | 0,4,3,2,1,6,5,4,0 | Ъ |
| 36 | 0,5,4,3,0 | V | 75 | 0,5,6,1,2,3,4,5,0 | / |
| 37 | 0,5,6,1,2,0 | S | 76 | 0,5,4,3,2,1,6,5,0 | « |
| 38 | 0,5,4,3,2,0 | T | 77 | 0,6,1,2,3,4,5,6,0 | next.table. |
| 39 | 0,6,1,2,0 | W | 78 | 0,6,5,4,3,2,1,6,0 | prev.table. |

Fig.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2267183 C2
- RU 2285284 C2
- US 5666113 A
- RU 2246749 C2
- US 6130665 A
- US 4972496 A
- RU 2236036 C2
- WO 03032140 A1
- RU 2277719 C2
- WO 0208882 A1